# EUROPEAN PATENT APPLICATION

(11) **EP 3 516 939 A1**
(43) Date of publication of application: **31.07.2019**
(21) Application number: 19151985.9
(22) Date of filing: 15.01.2019
(51) Int. Cl.: A01B 63/22, A01B 73/00, A01D 78/10

(54) **TOWED AGRICULTURAL IMPLEMENT**

(30) Priority: 30.01.2018 GB 201801525
(71) Applicant: AGCO Feucht GmbH, 90537 Feucht (DE)
(72) Inventor: Riedel, Juergen, 90537 Feucht (DE)
(74) Representative: AGCO Intellectual Property Department

(57) **Abstract**

A wheel mounting structure for a towed agricultural implement is disclosed comprising a support beam and a plurality of wheels 24. The wheels 24 are mounted to the support beam to be displaceable with respect to the support beam between a first position in a transport position and a second position displaced from the first position away from the support beam in a working position. This has as an advantage that the framework is displaced to increase a ground clearance when the towed agricultural implement is in the working position.

## Description

### FIELD OF THE INVENTION

The present invention relates to towed agricultural implements, and has particular, but not exclusive, application to towed agricultural implements having a plurality of processing members supported on deployable arms or booms, for example tedders or rakes.

### BACKGROUND

Towed agricultural implements adapted to be towed by agricultural vehicles such as tractors are well known. These include agricultural implements with deployable arms or booms, such as tedders or rakes, in which the deployable arms adopt a first transport position when the agricultural implement is being transported, for example on public highways, and a second working position when the agricultural implement is being used, for example in a field. By way of example, a tedder typically comprises a framework having first and second deployable bearing arms, each supporting a plurality of processing members. In use the bearing arms pivot between the working position in which the processing members are deployed to work hay lying in windrows on the ground and the transport position in which the bearing arms are displaced into a loaded position. There are legal requirements as to the width and height adopted by the bearing arms and the processing members in the transport position, creating a desire to lower the ground clearance in the transport position. However, this must be set against a requirement for a greater ground clearance for the processing members in the working position.

It is an advantage of the present invention that it seeks to provide a solution to these conflicting requirements.

### SUMMARY OF THE INVENTION

According to a first aspect of the present invention, a wheel mounting structure for a towed agricultural implement comprises a support beam and a plurality of wheels, at least one wheel being steerable, at least one of the plurality of wheels being mounted to the support beam to be displaceable with respect to the support beam between a first position and a second position displaced from the first position away from the support beam.

This has as an advantage that the support beam may be displaced to increase a ground clearance when the towed agricultural implement is in the second position (corresponding in use to a working position of the towed agricultural implement).

Preferably, the or each steerable wheel is mounted to the support beam by a steering linkage.

More preferably, the steering linkage comprises a steering link and a steering arm.

Preferably, the steering link is an extendable cylinder.

Preferably, the support beam is provided at each end with a tubular housing, a cylindrical member is provided in at least one of the tubular housings, and the or each cylindrical member is associated with one of the plurality of wheels.

Preferably the or each cylindrical member is associated with the or each of the steerable wheels.

Preferably, the cylindrical member is operable to displace the associated wheel between the first position and the second position.

Preferably, the rotatable cylindrical member is a hydraulic or pneumatic cylinder.

According to a second aspect of the invention a towed agricultural implement comprises a wheel mounting structure according to a first aspect of the invention.

Preferably, the wheel mounting structure is provided at a rear of the towed agricultural implement.

### BRIEF DESCRIPTION OF THE DRAWINGS

The invention will now be described, by way of example only, in which
Figure 1 shows a rear view of a wheel mounting structure for use with a towed implement in accordance with the present invention in a transport position;
Figure 2 shows a plan view of the wheel mounting structure of Figure 1;
Figure 3 shows a sectional view of the wheel mounting structure of Figure 1 in a working position;
Figure 4 shows a part cut away view of a support beam for use in the present invention;
Figure 5 shows a perspective view of the wheel mounting structure of Figure 1 in a transport position;
Figure 6 shows a perspective view of the wheel mounting structure of Figure 1 in a working position;
Figure 7 shows a side view of a towed agricultural implement in the transport position incorporating a wheel mounting structure in accordance with the present invention;
Figure 8 shows an end view of a lower part of the towed agricultural implement of Figure 7; and
Figure 9 shows a sectional view of a part of an embodiment of a wheel mounting structure in accordance with the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description.

Reference to terms such as longitudinal, transverse and vertical are made with respect to a longitudinal vehicle axis which is parallel to a normal forward direction of travel.

A towed agricultural implement typically comprises a framework provided at a front end with a hitch for connection to an agricultural vehicle such as a tractor and provided at a rear end with wheel assemblies. The wheel assemblies are typically individually mounted to the framework.

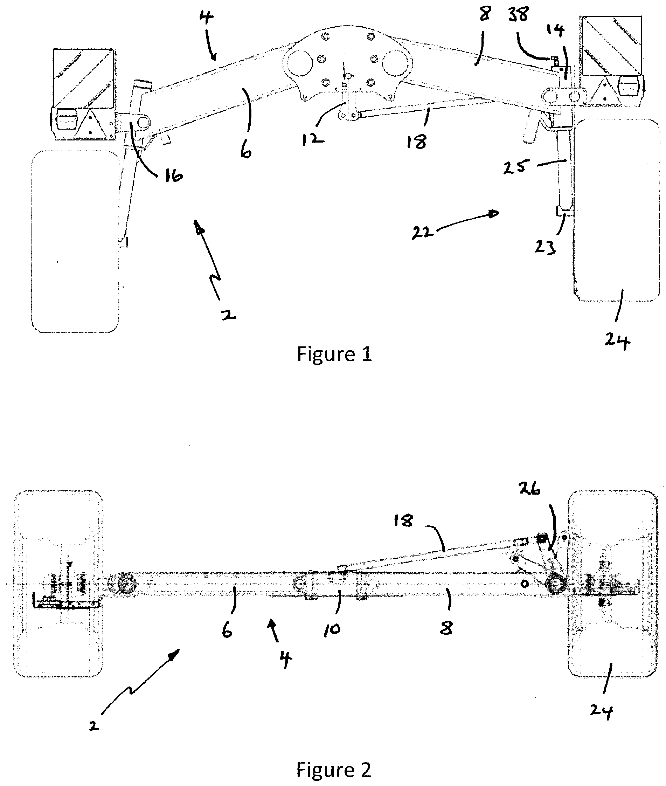

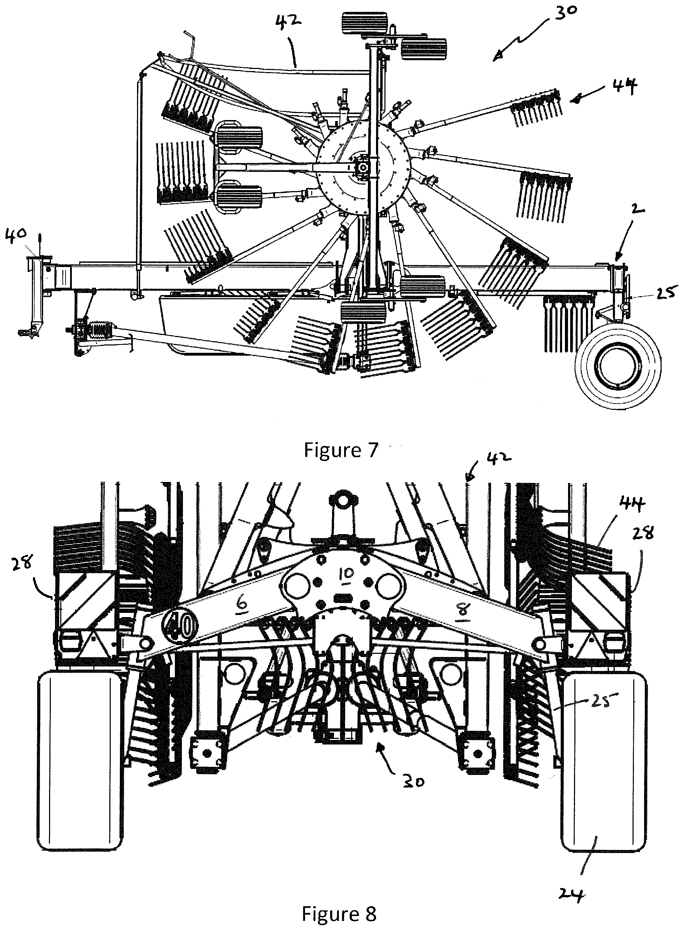

With reference initially to Figures 1 to 6, elements of a wheel mounting structure 2 for use with a towed agricultural implement may be seen. An example towed agricultural implement 30 including a support framework 40 of which the wheel mounting structure 2 in use forms a part are shown in Figures 7 and 8. It may be seen that the in the embodiment of Figures 7 and 8 the wheel mounting structure 2 is provided at the rear of the towed agricultural implement 30.

In the embodiment of Figures 1 to 3, 5 and 6, the right hand wheel assembly is steerable, as will be described below. For the purposes of clarity, the left hand wheel assembly of this embodiment is not shown as steerable, but in an preferred embodiment (for example Figures 7 and 8) the structure of the left hand side mirrors the right hand side to allow both wheel assemblies to be individually steerable.

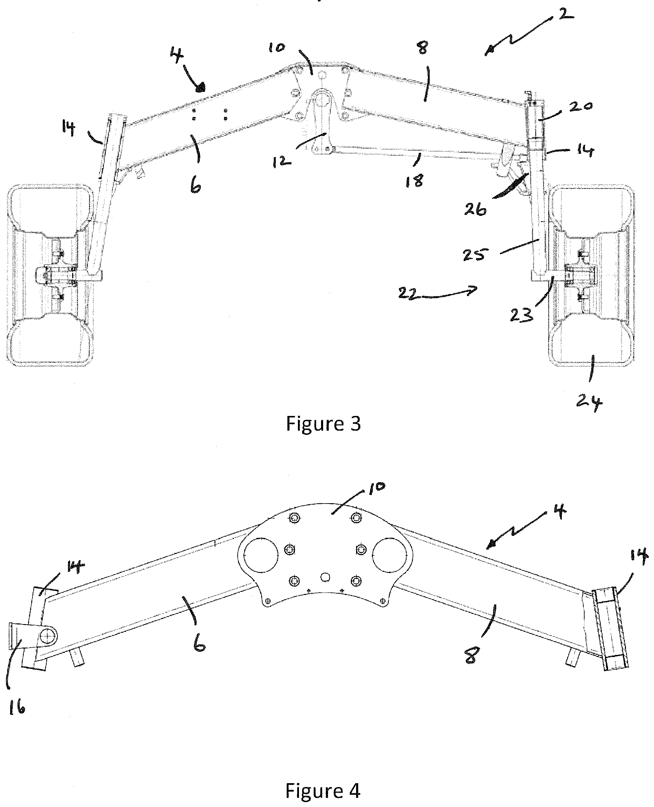

A support beam 4 is shown comprising first and second elements 6,8. Each of the first and second elements 6,8 is at one end fixedly connected to a central member 10. The support beam 4 is shown in more detail in Figure 4. The central member 10 may comprise front and rear plates mounted about a central structure. The central member 10 is adapted to support a depending bracket 12 (see Figures 1 and 3). The free ends of each of the first and second elements 6,8 are provided with a tubular housing 14 adapted to receive a cylindrical member. A mounting bracket 16 is shown secured to the left hand side of the support beam 4 in Figure 4. A corresponding mounting bracket (not shown) may also be provided at the right hand side.

A steering link 18 is supported at a first end from a lower part of the depending bracket 12.

Within the tubular housing 14 a cylindrical member 20 is housed. A portion of the cylindrical member 20 is mounted, for example as described below, to a wheel assembly 22. The wheel assembly includes an axle 23 to which a wheel 24 is mounted. The axle 23 is in turn secured to a substantially upright shaft 25, rotation of the upright shaft 25 causing the axle 23 and so the wheel 24 to be displaced. An upper end of the shaft 25 is provided with a fixed steering arm 26 extending therefrom, a free end of the steering arm 26 being attached to a second end of the steering link 18. The steering link 18 conveniently takes the form of a hydraulic cylinder which may be extended or retracted to cause movement of the steering arm 26 and so guide the wheel assembly 22. The steering arm 26 is shown in multiple positions in Figure 2 demonstrating a 'straight ahead' wheel position in the shown connected position as well as positions corresponding to left and right displacement of the wheel assembly 22.

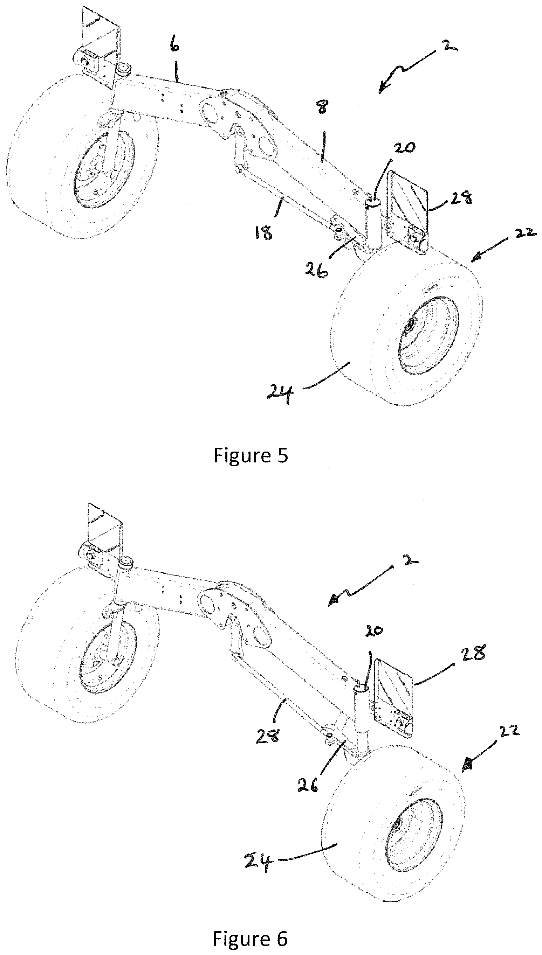

A hazard indicator 28 mounted to the rear of the support beam 4 is shown in Figures 5 and 6, preferably mounted by way of the mounting plate 16. The hazard indicator 28 is mounted to be located above the wheel 24.

In the present invention the cylindrical member 20 comprises a telescopic member, preferably a hydraulic or pneumatic cylinder.

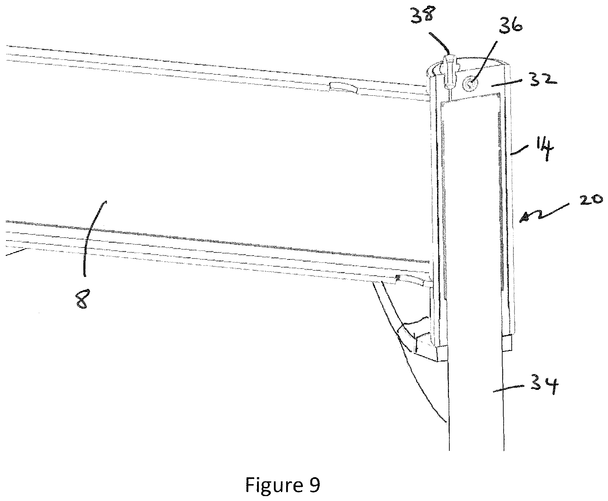

The telescopic member and the support beam 4 are shown in more detail in Figure 9. The telescopic member comprises an outer housing element 32 and an inner piston element 34. The outer housing element 32 is mounted to be fixed against movement with respect to the tubular housing 14. For example a fastening 36, such as a pin or bolt, may extend across a blind upper end of the tubular housing 14 through an upper end of the outer housing element 32 to secure the outer housing element 32 to the tubular housing 14. A valve connection 38 is also provided extending across the blind upper end of the outer housing element 32.

The inner piston element 34 is mounted within the outer housing element 32 to be displaceable along a longitudinal axis of the piston element 32. The inner piston element 34 is mounted within the outer housing element 32 so as to form a chamber between the inner piston element 34 and the outer housing element 32. A supply line, not shown, is attached to the valve connection 38, to allow connection of the chamber to a suitable consumer (not shown). Suitable actuation and control of the consumer allows the inner piston element 34 to be displaced with respect to the outer housing element 32.

A lower end of the inner piston element 34 is mounted on the wheel assembly 22, in any suitable manner, to allow left and right displacement of the wheel assembly 22. By way of example, the free end of the inner piston element 34 may be mounted in a bearing provided on an upper surface of the steering arm 26 to allow the steering arm 26 to move with respect to the lower end of the inner piston element 34.

In Figure 5, the right hand side of the wheel mounting structure is shown in a transport position. The steerable wheel 24 is shown in a lower position adjacent the second element 8 such that there is a relatively low clearance between the hazard indicator 28 and the wheel 24. In this position the support beam 4 is at its lowest position in relation to the ground over which the towed agricultural implement is being moved. In this position the towed agricultural implement 42 may be carried over the support framework 40 as shown in Figures 7 and 8. This has as an advantage that the available height in line with regulatory requirements for storing the towed agricultural implement 42 on the support framework 40 during transport is sought to be maximised.

In Figure 6, the right hand side of the wheel mounting structure is shown in a working position. In adopting the working position, the tubular housing 14 and the associated hazard indicator 28 have been displaced away from the wheel 24 such that the right hand end of the support beam 4 has an increased clearance above the ground. The hazard indicator 28 may be seen to be spaced a greater distance from the wheel 24 than in Figure 5. It will be appreciated that with a cylindrical member of the left hand side also expanded, the support beam 4, and so the wheel mounting structure, will be lifted evenly to provide for more space to be available beneath the support framework for operation of the processing members 44 of the agricultural implement 42 mounted on the support framework.

From reading the present disclosure, other modifications will be apparent to persons skilled in the art. Such modifications may involve other features which are already known in the field and component parts therefore and which may be used instead of or in addition to features already described herein.

## Claims

1. A wheel mounting structure for a towed agricultural implement comprising a support beam (4) and a plurality of wheels (24), at least one wheel being steerable, at least one of the plurality of wheels being mounted to the support beam to be displaceable with respect to the support beam between a first position and a second position displaced from the first position away from the support beam (4).

2. A wheel mounting structure according to claim 1, **characterised in that** the or each steerable wheel is mounted to the support beam (4) by a steering linkage.

3. A wheel mounting structure according to claim 2, **characterised in that** the steering linkage comprises a steering link (18) and a steering arm (26).

4. A wheel mounting structure according to claim 3, **characterised in that** the steering link (18) is an extendable cylinder.

5. A wheel mounting structure according to any of claims 1 to 4, **characterised in that** the support beam (4) is provided at each end with a tubular housing (14), a cylindrical member (20) is provided in at least one of the tubular housings (14), and the or each cylindrical member (20) is associated with one of the plurality of wheels (24).

6. A wheel mounting structure according to claim 5, **characterised in that** the or each cylindrical member (20) is associated with the or each of the steerable wheels (24).

7. A wheel mounting structure according to claim 5 or claim 6, **characterised in that** the cylindrical member (20) is operable to displace the associated wheel (24) between the first position and the second position.

8. A wheel mounting structure according to any of claims 5 to 7, **characterised in that** the cylindrical member (20) is a hydraulic or pneumatic cylinder.

9. A towed agricultural implement comprises a wheel mounting structure according to any of claims 1 to 8.

10. A towed agricultural implement according to claim 9, **characterised in that** the wheel mounting structure is provided at a rear of the towed agricultural implement.
